# EUROPEAN PATENT APPLICATION

(11) **EP 4 613 652 A1**
(43) Date of publication of application: **10.09.2025**
(21) Application number: 25161995.3
(22) Date of filing: 06.03.2025
(51) Int. Cl.: B64G 1/40, F03H 99/00

(54) **MAGNETIC FIELD PROPULSION UNIT**

(30) Priority: 08.03.2024 EP 24162378
(71) Applicant: Tomorrow's Motion GmbH, 82319 Starnberg (DE)
(72) Inventor: May, Lutz, 82319 Starnberg (DE)
(74) Representative: LKGLOBAL Lorenz & Kopf Patentanwalt Attorney at Law PartG mbB

(57) **Abstract**

A magnetic field propulsion unit (1) for generating a drive force when being arranged in an external magnetic field (100) is described. The magnetic field propulsion unit (1) includes a support structure (5), a magnetic field generating device (10) attached to the support structure (5) and configured to generate a first magnetic field (12), an energy supply unit (30), and a control unit (40). The energy supply unit (30) provides the magnetic field generating device (10) with electrical energy. The control unit (40) controls the energy supply unit (30) so that the energy supply unit (30) supplies energy to the magnetic field generating device (10). The control unit (40) supplies varying current to the magnetic field generating device (10). The magnetic field generating device (10) has a central axis (11) and is arranged in the external magnetic field (100) such that the central axis (11) is inclined with respect to magnetic field lines (101) of the external magnetic field (100) at an angle different from 0°, 90°, 180°, and 270°.

## Description

### TECHNICAL FIELD

This description generally relates to generating a propulsion force, for example by a propulsion unit.

### BACKGROUND

Generally, a propulsion unit provides a propulsion force to move a means of transport for people and/or, in general, cargo. The propulsion unit may also be referred to as a propulsion drive.

To assist and to support movement of people, animals, and goods, the humans invented several kinds of wheel-based wagons (horse carriages, steam locomotive, etc.) and other types of machineries (like planes and boats). Vessels like wagons, boats, and planes need a propulsion system to move from one to the next location. It is either muscle power (human muscle or animal muscle), renewable energy (wind), or some kind of engine that makes the vessel move.

In this document, the understanding is that the purpose of a "propulsion" system is to move an object. Most of the practiced propulsion solutions are friction-based and/or based on a moving physical device (pressing against the road surface, or propeller pushing against air or water, wind blowing onto a sail, etc.). In the most recent times, some propulsion systems are mass separation based (all types of rocket drives and ion drives, for example).

However, propulsion systems used today are either relying on the presence of friction and/or movement in combination with friction (the huffs from the horse pushing and scraping against the road surface, or the rotating tire of the car rubbing against the street surface, for example) or they use some kind of physical mass separation process whereby an expendable mass (like a gas, ions, jet of water) is accelerated away from the object that needs to be moved. Of course, all propulsion systems also rely on a source of energy to power the propulsion system.

### SUMMARY

There may be a need for a propulsion unit with reduce dissipation losses and increased efficiency, e.g., by way of reducing the dissipation losses that are linked to propulsion units with moving parts.

According to an aspect, a magnetic field propulsion unit for generating a drive force when being arranged in an external magnetic field is provided. The magnetic field propulsion unit comprises a support structure, a magnetic field generating device attached to the support structure and configured to generate a first magnetic field, an energy supply unit, and a control unit. The energy supply unit is configured to provide the magnetic field generating device with electrical energy. The control unit is configured to control the energy supply unit so that the energy supply unit supplies energy to the magnetic field generating device. The control unit is configured to supply varying current to the magnetic field generating device. The magnetic field generating device has a central axis and is arranged in the external magnetic field such that the central axis is inclined with respect to magnetic field lines of the external magnetic field at an angle different from 0°, 90°, 180°, and 270°.

In particular, the central axis of the magnetic field generating device also corresponds to the central axis of the magnetic field generated by the magnetic field generating device.

Supplying varying current may mean that the amount of current supplied to the magnetic field generating device changes, i.e., the magnetic field generating device is supplied with changing current.

Preferably, the magnetic field generating device is supplied with a unipolar current of varying intensity, i.e., varying amount of current.

The central axis of the magnetic field generating device may be inclined with respect to the magnetic field lines of the external magnetic field, i.e., the central axis is neither parallel nor perpendicular with respect to the magnetic field lines of the external magnetic field. **In** other words, the central axis of the magnetic field generating device is inclined with respect to the magnetic field lines of the external magnetic field at an angle between 1° and 89°, 91° to 179°, 191° to 269°, or 271° to 359°.

The external magnetic field may be the magnetic field of the earth (EMF, earth's magnetic field) or of another planet, or moon, or even of the sun. Alternatively, the external magnetic field may be a magnetic field that is generated by a technical device. When the external magnetic field is the earth's magnetic field, the angle values and ranges referred to above are understood in respect of the horizontal scalar (vector) of the earth's magnetic field.

The control unit may control the energy supply unit in such a manner that the magnetic field generating device is pulsed with unipolar current of either positive or negative polarity during a power cycle. The polarity of the unipolar current may change from power cycle to power cycle, depending on the direction the magnetic field propulsion unit moves within the external magnetic field. Within a single power cycle, the supply current for the magnetic field generating device is unipolar (but not DC, the value of the current varies during a power cycle). However, the polarity of the supply current may change from power cycle to power cycle.

According to an embodiment, the central axis is inclined with respect to magnetic field lines of the external magnetic field at an angle between 30° and 60°, 120° and 150°, 210° and 240°, or 300° to 330°.

Preferably, the central axis is inclined with respect to the magnetic field lines of the external magnetic field at an angle of about 45°, about 135°, about 225°, or about 315°.

According to a further embodiment, the magnetic field generating device is attached to the support structure such that it is eccentric with respect to a center of gravity of the magnetic field propulsion unit.

According to a further embodiment, the current supplied to the magnetic field generating device is a unipolar current.

According to another embodiment, the current supplied to the magnetic field generating device is a pulsed current.

The current supplied to the magnetic field generating device may have different raising and falling slopes, i.e., the current may raise slower than it falls. **In** other words, the value of the first derivative of the current with respect to the time is smaller for the raising slope than for the falling slope.

For example, the current may be supplied as a saw-tooth-signal with a slowly raising slope and a sudden falling slope.

According to a further embodiment, the magnetic field generating device is a coil having multiple windings.

The coil which is used as the magnetic field generating device may be an air coil without a core or it may comprise a ferromagnetic core.

According to a further embodiment, the external magnetic field is a uniform magnetic field.

Uniform magnetic field means that the magnetic field has almost linear and parallel magnetic field lines.

According to a further embodiment, the external magnetic field is the earth's magnetic field.

When considering a limited section of the earth's magnetic field, then it can be considered a uniform magnetic field because the magnetic field lines are linear and parallel to each other due to the spatial extent of the earth's magnetic field. Du to their respective size, the same applies to the magnetic field of other planets, moons, or stars like the sun, as long as these have a magnetic field.

According to a further embodiment, the magnetic field generating device is firmly attached to the support structure.

Thus, any movement of the magnetic field generating device in the external magnetic field is transferred to the support structure and the support structure performs either a rotational movement, a linear movement, or a combination of a rotational and linear movement in the external magnetic field.

According to a further embodiment, the magnetic field propulsion unit further comprises a magnetic field source attached to the support structure and spaced apart from the magnetic field generating device, wherein the magnetic field source is configured to provide a second magnetic field, wherein a central axis of the magnetic field source is inclined with respect to the magnetic field lines of the external magnetic field, wherein the central axis of the magnetic field source is inclined with respect to the central axis of the magnetic field generating device.

The magnetic field source is provided in addition to the magnetic field generating device and may be described as a counterpart of the magnetic field generating device. The magnetic field source is a second device that provides or generates a magnetic field. This magnetic field of the magnetic field source can be used for compensating for unwanted parasitic turning forces. In this case, the magnetic field source may be placed at any location with respect to the support structure and the center of gravity of the magnetic field propulsion unit. The magnetic field of the magnetic field source may also be used for generating a propulsion drive (in addition to compensating for unwanted parasitic turning forces) for moving the magnetic field propulsion unit in the external magnetic field. In this case, the magnetic field source is located eccentric with respect to the center of gravity of the magnetic field propulsion unit.

The central axis of the magnetic field source also corresponds to the central axis of the second magnetic field provided by the magnetic field source.

According to a further embodiment, the magnetic field source is eccentric with respect to the center of gravity of the magnetic field propulsion unit.

According to a further embodiment, the central axis of the magnetic field source is inclined with respect to the central axis of the magnetic field generating device at an angle between 70° to 110°, preferably 80° to 100°, and more preferably of 90°.

According to a further embodiment, an effective distance of the magnetic field source from the center of gravity is same than an effective distance of the magnetic field generating device from the center of gravity.

In other words, a center of the magnetic field generated by magnetic field generating device is spaced apart from the center of gravity at an equal distance than the center of the magnetic field provided by the magnetic field source. Thus, a torque generated by the magnetic fields of the magnetic field generating device and the magnetic field source are equal and compensate each other so that a resulting direction of movement is linear when the magnetic fields of the magnetic field source and of the magnetic field generating device are of equal intensity.

The effective distance between the magnetic field source / the magnetic field generating device from the center of gravity is the distance between the center of the respective magnetic field and the center of gravity.

However, when the intensity of the respective magnetic fields is not identical, the effective distance between the magnetic field source / the magnetic field generating device from the center of gravity may be different from each other in order for the torques to compensate.

According to a further embodiment, the magnetic field source is a permanent magnet.

According to an alternative embodiment, the magnetic field source is a coil.

According to a further embodiment, the magnetic field source is electrically connected to the energy supply unit, wherein the control unit is configured to supply varying current to the magnetic field source.

According to a further embodiment, the magnetic field generating unit and the magnetic field source are arranged such that they generate torque forces in opposite directions when they are supplied with electric current.

The magnetic field source (permanent magnet or electrically powered coil) compensates torque forces resulting from the magnetic field generating device. Thus, a rotational momentum is removed and the propulsion unit performs linear movement in the external magnetic field.

According to a further embodiment, the control unit is configured to provide the magnetic field source with unipolar varying current or direct current with a constant current value.

According to a further embodiment, the control unit is configured to provide the magnetic field source with electric current in a manner different from providing electric current to the magnetic field generating device.

This means that, when the magnetic field generating device is supplied with electric current, the magnetic field source is not supplied with electric current, and vice versa. Thus, only one of the magnetic field generating device and the magnetic field source are powered at a time. The magnetic field generating device and the magnetic field source are generally supplied with similar current signals, i.e., the shape of the current signal and the intensity of the current are same or similar but phase shifted with respect to each other such that the magnetic field generating device and the magnetic field source are powered in an alternating manner.

This mode of operation is implemented when the magnetic field generating device and the magnetic field source are both used for generating a propulsion force. However, when only the magnetic field generating device is used for generating the propulsion force and the magnetic field source is used to compensate rotational forces only, the magnetic field source may receive current at the same time as the magnetic field generating device.

### BRIEF DESCRIPTION OF THE DRAWINGS

The magnetic field propulsion unit will hereinafter be described in conjunction with the following drawing figures, wherein like numerals denote like elements, and wherein:
Fig. 1 schematically shows the movement of electrically powered inductors in relation to one another;
Fig. 2 schematically shows the possible arrangements of the two electrically powered inductors of Fig. 1;
Fig. 3 schematically shows the structure of an air coil that can be exemplarily used as a magnetic field generating device;
Fig. 4 schematically shows two different positions of a magnetic field generating device in an external magnetic field;
Fig. 5 schematically shows the interaction between magnetic fields of a magnetic field generating device and an external magnetic field;
Fig. 6 schematically shows the achievable effectiveness in generating linear motion depending on the angular orientation of the magnetic field generating device in relation to the field lines of the external magnetic field;
Fig. 7 schematically shows two different positions of a magnetic field generating device in an external magnetic field;
Fig. 8 schematically shows the possible torque forces of a magnetic field generating device oriented to the East or West in the earth magnetic field;
Fig. 9 schematically shows a magnetic field propulsion unit in an external magnetic field;
Fig. 10 schematically shows a magnetic field propulsion unit in an external magnetic field;
Fig. 11 schematically shows a magnetic field propulsion unit in an external magnetic field;
Fig. 12 schematically shows a magnetic field generating device in combination with a permanent magnet;
Fig. 13 schematically shows the superposition of a magnetic field of the magnetic field generating device and a magnetic field of a permanent magnet.

### DETAILED DESCRIPTION OF EMBODIMENTS

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

A greater understanding of the described subject matter may be obtained through a review of the illustrations together with a review of the detailed description that follows.

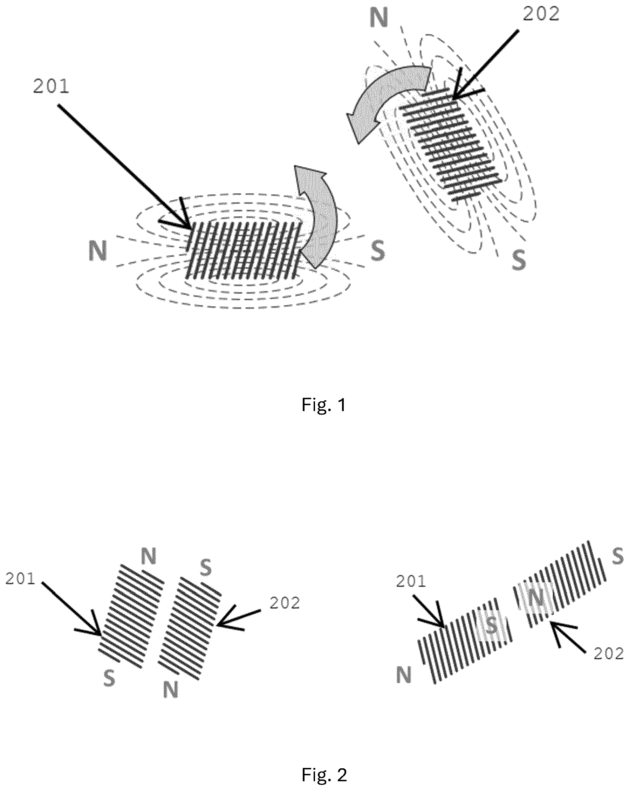

Fig. 1 shows movement of a first inductor 201 and a second inductor 202 when being powered with electric energy, respectively. The first and second inductors 201, 202 generate magnetic fields with respective poles N (north) and S (south) causing a movement of the inductors indicated by the two respective arrows.

The interaction between two or more magnetic field sources like the first inductor 201 and the second inductor 202 will create a range of mechanical forces that act on them as the respective magnetic fields will either attract or repel each other, depending on the position and orientation of the poles. Assuming that constant electrical currents are used to create these magnetic fields and further assuming that these field sources are placed in the outer space where they can freely rotate and move in relation to each other, then one would observe that the field sources (the magnetic field generators like the first inductor 201 and the second inductor 202) will turn and finally move towards each other until they reach their final resting place (clustering together).

Placing electrically powered inductors (coils 201, 202) in space at random positions and supplying both of them with a DC current will make them turn around and then moving towards each other until they reach their resting place. The cause of the rotational and linear motion is the attracting and repelling forces between the magnetic poles of the respective magnetic fields.

Fig. 2 shows two possible arrangements of two electrically powered inductors 201, 202. The axes of the inductors 201, 202 are parallel to each other with both poles N, S of each inductor 201, 202 being attached to their respective counterpart of the other inductor 201, 202, as shown in Fig. 2 on the left. Alternatively, the central axes of the inductors 201, 202 coincide and only one pole of each inductor is attached to its counterpart pole of the other inductor.

Based on the principles described with reference to Fig. 1 and Fig. 2 and with reference to the claims and the embodiments described above, the general idea of the magnetic field propulsion unit as disclosed herein may be described as follows:
When one or more than one magnetic field generating device are supplied with pulsed or alternating current, then the resulting mechanical movement will be much more complex and dynamically as described in Fig. 1 and Fig. 2. In both cases (supplying the inductors with DC currents or with AC currents) the generated mechanical forces can be explained and calculated by the resulting angular accelerations (caused by the generated torque forces) and linear accelerations (based on forces like repelling, attracting, Lorentz laws and others). The same forces exist when this will be executed here on earth. In other words, it does not matter where these experiments are executed (in space or on earth), the principle of the generated mechanical forces are identical. However, because of the presence of gravity and potential friction forces that act on the magnetic field sources, the resulting values of angular acceleration and of the linear movement may be somewhat different.

In this document the terms inductor and air-coil may be used interchangeably. These terms relate to a magnetic field generating device. While an inductor with a ferro magnetic core could be used to create some of the effects described in here, there may be significant effects when using a ferro-magnetic core. Preferably, the magnetic field generating device is an air coil.

In this document, the terms test object, frame structure of the object that has to be moved, and object that has to be moved may be interchangeably used. These terms relate to the structure to be moved by the magnetic field propulsion unit.

One or more than one magnetic field generating devices (e.g., inductors) are supplied with a changing electric current to create linear motion (through linear acceleration) when exposing the inductor to a substantially or locally uniform external magnetic field. The inductors are mounted onto a frame structure and have a stable (not changing) position in relation to each other. This frame structure is the object to be moved and also includes the electric power supply (batteries) and electronics.

To achieve the phenomenon of creating linear motion forces, the angular orientation between the magnetic field (created by the inductor/s) and the external magnetic field is crucial. The generated angular acceleration forces and the linear motion forces can be used for steering (turning) objects and to propel them into a desired direction. Such objects may be satellites in space, or objects floating on water like surveillance systems or self-propelled smart buoys, for example.

Placing a magnetic field generating device 10 (example: inductor that is powered by electric current) in a uniform external magnetic field (example: Earth Magnetic Field), whereby the angular placement (bearing position from the magnetic field generating device in relation to the external uniform magnetic field) is of importance, and changing the value of current that runs through the electrically powered inductor, then two mechanical forces can be observed: the creation of torque and the creation of linear acceleration forces.

The created torque forces that act on both (the external uniform field and the inductor) will try to turn the angular position of the inductor in such a way that the artificially generated magnetic field lines will become aligned with the external uniform magnetic field.

The created linear motion forces act onto the inductor and are trying to push it into a direction that depends on the angular relationship between the inductor and the external uniform magnetic field.

To reliably create linear motion forces, it is helpful when the external magnetic field (example: the earth magnetic field) has substantially uniform character. When the external magnetic field is not uniform (fluctuation in field strength and angular direction), the magnetic field propulsion unit will still generate torque and linear motion forces but will be more difficult to calculate and to control them.

Generating linear motion is caused by a number of different physical effects of which two will be explained below. The magnetic field generating device (e.g., air coil) is placed so that the direction of the created linear motions (forwards / backwards / sideways / etc.) and the angular turning direction that act onto the objects frame structure (that is the object that has to be moved and has a GMP drive is installed) do support each other and do not act against / absorb / cancel-out each other.

The magnetic field propulsion unit is a system where artificially created magnetic fields interact with an external uniform magnetic field. It is assumed that the magnetic field propulsion unit can freely change its position (location) and its rotational orientation in relation to the stationary external field (example: the Earth Magnetic Field).

Triggered by the changing supply current to the air coil, in value changing torque forces are created between the air coil and the external field, like the EMF. As long as the air coils are not placed in the geometric center of the magnetic field propulsion unit (that is the location of the center of gravity), there will be a non-symmetrical rotational position-change caused by the torque forces that will keep changing in amplitude and polarity.

Of course, torque forces (caused by the magnetic interaction between the external field and the field created by the inductor) can also be created by a constant current supply to the air coils (instead of using changing currents, i.e., currents of the same polarity but different value). However, in this document, use of pulsed or changing electric currents to the air coil are described.

Surrounded by a uniform external magnetic field, almost any type of current supplied to the magnetic field generating device (e.g., inductor, air coil) will create a torque force that acts onto the magnetic field generating device. This torque force wants to create a partial turn or rotation to the magnetic field generating device. As the air coil is mounted onto the frame structure of the test object (the object that has to be moved), this torque force is mechanically transferred in part from the air coil to the test object structure.

During the process of building-up the magnetic field (by supplying an increasing current to the magnetic field generating device, while the magnetic field generating device is exposed to a uniform external magnetic field, and while the angular position of the magnetic field generating device in relation to the external uniform field is such that torque forces will be created, a linear acceleration force will act onto the magnetic field generating device in addition and besides the created torque force.

Very specifically, the creation of linear motion happens only while the magnetic field, created by the air coil, is changing, i.e., varying in intensity (example: increasing its intensity). Therefore, the air coil is powered by a unipolar, pulsed current. In general, it can be stated that the larger the pulsed current is, the greater the linear acceleration forces are. A good performance may be achieved when applying a pulsed power signal that has a controlled raising edge (ramping up) and a fast-falling edge. Such a power driver signal looks like a saw-tooth.

The speed with which the magnetic field has to change to achieve best performance may be given by the inductivity of the air coil. The lower the inductivity is, the faster the raising edge can be. Assuming the air coil has an inductivity of 1 mH, then the optimal saw-tooth frequency is in the range of 600 Hz to 1 kHz.

The angular orientation (bearing) of the inductor in relation to the external uniform magnetic field defines how effective the creation of linear motion forces (or linear acceleration) will be. There are four bearing locations (referenced to the external magnetic field) when the air-coil will be unable to create linear motion (0°, 90°, 180°, and at 270°).

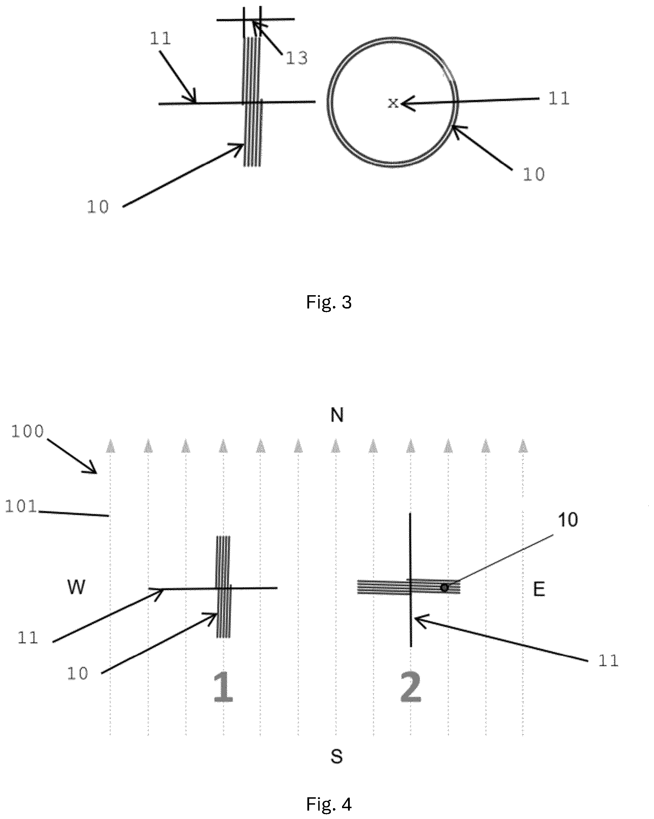

Fig. 3 shows a magnetic field generating device 10 with a central axis 11 and a length 13 (i.e., width of the magnetic field generating device 10 along the central axis 11). The magnetic field generating device 10 is an air coil in this example.

While in this document the magnetic field generating devices are shown as inductors having a circular shape (round shaped) and being air coils that are relatively short in length and have a relatively large diameter, it should be understood that this example is not intended to limit the scope of the claims.

Fig. 4 shows a magnetic field generating device 10 in two possible orientations "1" and "2" in an external magnetic field 100.

In a top-down-view, the magnetic field generating devices 10 are surrounded by a uniform external magnetic field 100 with magnetic field lines 101. The central axis 11 of the magnetic field generating device 10 at the left side (marked "1") is in line with the East-West axis (with reference to the external field), while the central axis 11 of the inductor at the right (marked "2") is in line with the North-South axis. In this document, we will say that the air coil "1" is oriented towards East or West, while the air coil "2" is oriented towards North or South.

For example, the external uniform magnetic field 100 may be the Earth Magnetic Field. When in the following text it is stated that the inductor is oriented or looking towards the East or the West, then this means that the magnetic field lines of the magnetic field generated by the magnetic field generating device and running through the center of the magnetic field generating device are in line to the East-West axis in relation to the Earth Magnetic Field. Meaning that the magnetic field lines of the magnetic field generated by the magnetic field generating device inside the inductor are perpendicular in relation to the North-South axis of the horizontal portions (scalar) of the Earth Magnetic Field.

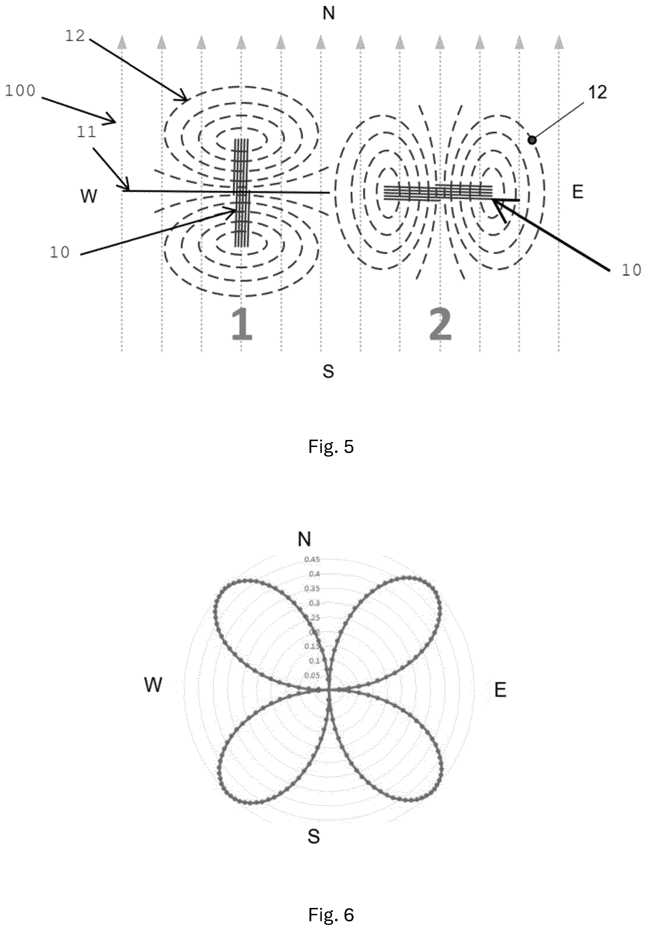

Fig. 5 shows the magnetic fields 12 generated by the magnetic field generating devices 10 together with the magnetic field lines of the external magnetic field 100.

Fig. 5 schematically shows the magnetic field lines 12 created when the inductor 1 (magnetic field generating device 10 on the left) or the inductor 2 (magnetic field generating device 10 on the right) is powered by a DC electric current. In relation to the external magnetic field 100, the field lines of the magnetic field generated by inductor 1 at its central axis are perpendicular, while the field lines of the magnetic field generated by inductor 2 at its central axis are parallel to the horizontal portion (horizontal scalar) of the field lines of the external magnetic field 100.

As the central axis of inductor 1 is running along the bearing orientation East-West (90° to 270°) the generated torque forces (because of the interaction with the EMF) are the largest possible. As the central axis of the inductor 2 is running along the bearing orientation Nort-South (0° to 180°) the generated torque forces (because of the interaction with the EMF) are the smallest possible for this coil placement.

Fig. 6 shows the achievable effectiveness in generating linear motion (acceleration forces) depending on the angular orientation of the inductor 10 in relation to the horizontal portion of the Earth Magnetic Field (external uniform field 100). The schematic representation in Fig. 1 shows that when the inductor is looking straight towards East, West, North, or South, then the efficiency in creating linear motion (acceleration forces) is at its lowest. And when the inductor is looking towards any of the following bearing positions (angles): 45° (North-East), 135° (Sout-East), 225°, or 315°, then it is the highest efficiency in generating linear acceleration forces.

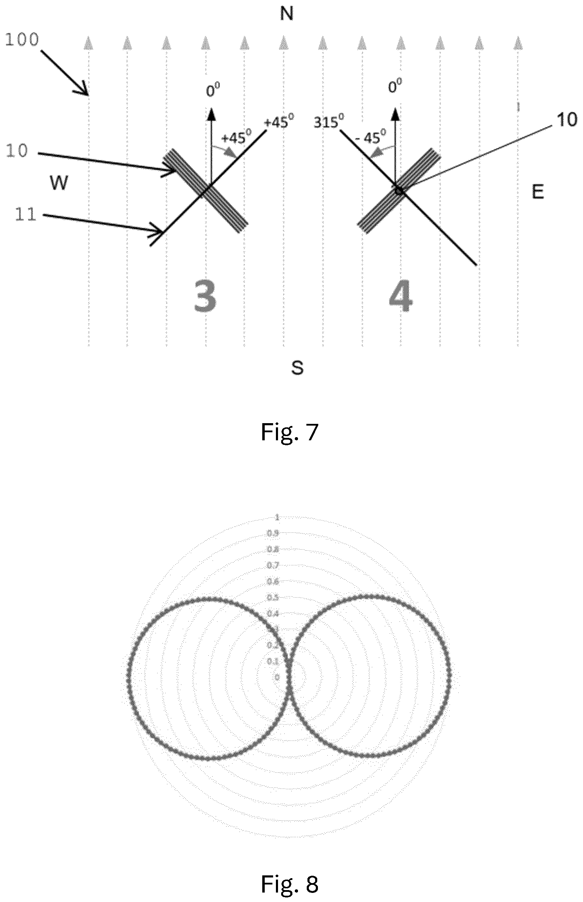

Fig. 7 shows two possible orientations of the magnetic field generating device 10 at +/-45° with respect to the North-South-direction. When the inductor is looking towards any of the following bearing positions (angles): 45° (North-East), 135° (Sout-East), 225°, or 315°, then it can operate at the highest efficiency in generating linear motion following the operational principle of a magnetic field propulsion unit described in this document.

However, when looking at the optimal angular placement (bearing) for the magnetic field generating device 10 in relation to the external magnetic field 100 when wanting to generate torque forces (turning forces), then the optimal bearing position for the magnetic field generating device is 90° (looking to the East) and 270° (looking to the West). The worst bearing positions to generate torque forces are the bearing orientations 0° and 180°, i.e., when the inductor is looking straight towards the horizontal scalar North or the South, it generates the lowest torque forces, as schematically shown in and described with reference to Fig. 8.

As shown in Fig. 8, when an electrically powered inductor is looking towards the East (bearing position of the magnetic field generating device is 90°) or the West (bearing position of the magnetic field generating device is 270°) in relation to the external magnetic field 100, the created torque forces are at its largest. When the electrically powered inductor is looking towards the horizontal scalar of the external magnetic field in the direction North or the South, then the generated torque forces are at its lowest.

Depending on the latitude where the measurements are taken, the effect of the inclination of the Earth Magnetic Field will impact what the absolute value of horizontal portion (scalar) of the Earth Magnetic Field is. Near or at the equator, most if not all of the magnetic field lines of the Earth Magnetic Field (EMF) runs horizontally, while directly at the North- and the South-pole the inclination of the EMF is 90° (running vertically in respect to the Earth horizon).

While the generic term inductor may have been used when talking about an electrically powered magnetic field generating device, to achieve good performance in creating linear motion forces (acceleration forces), the inductor may preferably have the following design characteristics: the magnetic field generating device is an air coil (no ferro magnetic core, or very little core material), it is short in length (length meaning the "thickness" of the coil along the central axis), it has a largest possible diameter (depending on the space available in the application), it has a high current capability (several Amperes up to >500 A), and it has good thermal radiation capabilities.

For an exemplary use case, attention may have to be paid to the coil inductivity (in milli or in micro Henry). When the inductivity is large in value, then the usable operational frequency (frequency of the pulse pattern or the saw-tooth pattern with which the current runs through the coil) will be low. As the speed with which the magnetic field strength (created by the air coil) will change is getting slower, so will the created linear acceleration forces. A large inductivity has the effect that the speed of the magnetic field change is slow, which results in a reduced current consumption, but also results in very little linear acceleration forces. A large inductivity also means that inductors DC resistivity is getting larger, which may further reduce the current consumption and the effectiveness of creating linear motion forces.

When the air coil inductivity is getting smaller, then the operational pulse power frequency has to increase. The resistivity (in Ohm) of the air coil is becoming smaller as well, which causes the current consumption to increase. The generated linear acceleration forces will increase.

When the air coil inductivity is getting smaller (which will cause the resistivity of the air coil to become smaller), and the operational frequency is not changing (remains at a lower frequency), then the electric current consumption will increase without increasing the creation of linear acceleration forces.

Depending on the targeted application, the best balance between inductivity and operational frequency has to be found that will then define the systems power consumption and efficiency in generating the acceleration forces.

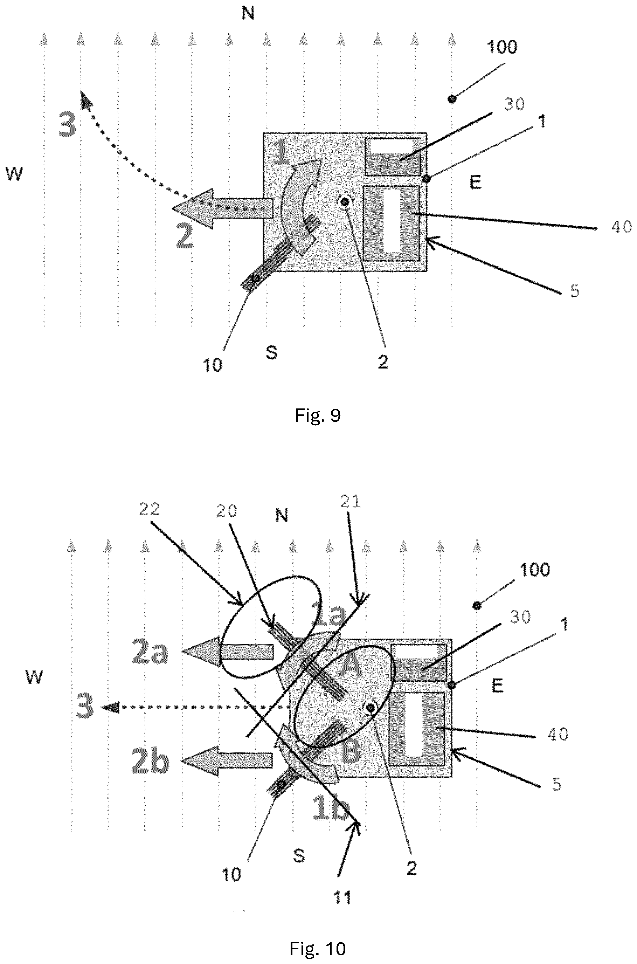

Based on the principles set out above, different examples of a magnetic field propulsion unit are described with reference to Figs. 9 to 11.

Fig. 9 shows a magnetic field propulsion unit 1 with only one magnetic field generating device 10. The magnetic field propulsion unit 1 comprises a frame structure 5 and has a center of gravity 2. The magnetic field generating device 10, the energy supply unit 30 with a battery, and the control unit 40 are mounted to the frame structure 5.

When generating linear acceleration forces with the magnetic field propulsion unit 1 and doing so by using one air coil 10 only, the motion is created as follows:
The pulsed current that is supplied to the air coil 10 by the energy supply unit 30 as controlled by the control unit 40 will generate linear acceleration (arrow "2") and will generate torque forces (arrow "1". Both these forces will act onto the air coil 10 and will want to push the air coil 10 forward into a specific direction (see marking number "2" in Fig. 9) and will also try to make the air coil 10 to turn in either clockwise (CW) or counter-clockwise (CCW) direction (see marking "1" in Fig. 9). The resulting motion will be along a curved path (see marking number "3" in Fig. 9). **In** which direction the air coil 10 travels and in which of the two possible turning directions it rotates depends on the air coil's bearing orientation (in relation to the external uniform magnetic field 100, example the EMF) and the polarity of the supplied pulsed current. Assuming that the air coil is suspended in such a way that it can freely act / move because of the applied mechanical forces, the air coil will turn and move forward at the same time. After some short time (example: a few seconds, below one minute), the angular position of the air coil is such that this system will no longer be able to generate linear acceleration because of the continuous turning motion. The forward motion will be in a curved shape (see marking number "3" in Fig. 9). When the bearing orientation of the air coil 10 is such that the field lines of the generated magnetic field are parallel to the field lines of the uniform external field 100, then the process of generation mechanical motion forces (linear accelerations and angular accelerations) will come to an end.

Fig. 9 is a representation of the magnetic field propulsion unit 1 seen in the top-down view. The frame structure 5 is the object that has to be moved by the motion forces created by the magnetic field generating device 10. The air coil 10 is mounted to the frame structure 5 and is powered by a pulsed electrical signal. This pulsed electrical signal is generated by the on-board electronic and an electric power source (example: rechargeable battery in the energy supply unit 30). When using only one air coil for the creation of linear motion, then the magnetic field propulsion unit drive signal will generate torque forces (because of the interaction with the external magnetic field) and it will generate linear motion forces.

The torque forces turn around (the direction of turning is subject of the polarity of the driver signal) (see marking number "1") and the linear motion forces move the test object towards the West (the direction depends on the signal polarity of the driver electronics) (see marking number "2").

As both motion forces "1" and "2" act on the test object simultaneously, the resulting travelling-path is curved (see marking number "3").

Using only one air coil 10 to create linear motion (acceleration) bears the risk that the parasitic turning forces will shorten the time this propulsion technology can function as desired. What is needed is some means to either eliminate the parasitic turning forces or effectively compensate for them. The objective is that only the linear motion forces (accelerations) will prevail.

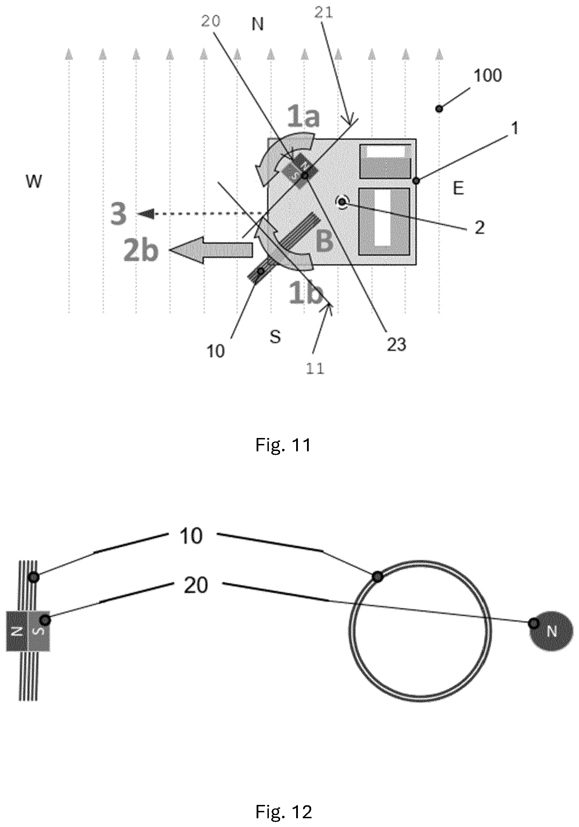

Fig. 10 shows a magnetic field propulsion unit 1 with two magnetic field generating devices 10, 20, wherein the device 20 is referred to as magnetic field source 20 because it can be an electrically powered air coil (Fig. 10) or a permanent magnet (Fig. 11). The magnetic field propulsion unit 1 described in Fig. 10 substantially corresponds to that of Fig. 9, except that in Fig. 10, the magnetic field propulsion unit 1 additionally includes the magnetic field source 20.

To prevent the parasitic torque force to turn / rotate the magnetic field propulsion unit, an approach is provided to neutralize the turning force "1" referred to in Fig. 9. In the following, two possible approaches are described, both of them utilizing magnetic physics.

In the example of Fig. 10, two inductors (air coils) are used: 10 and 20. In this example, only one air coil 10, 20 operates at one time, meaning that coil A and coil B are not operated simultaneously. As explained earlier, their angular position is such to produce linear motion most optimal, i.e., the central axes 11, 21 are perpendicular to each other and at an angle of +/-45° to the north-south-direction, respectively. In other words, the air coils are angled by +/-45° in relation to the magnetic field lines of the external magnetic field 100.

As it is not possible to prevent the creation of torque forces when supplying the driver signal to an air coil A, B, two air coils are used that are positioned differently in relation to each other and in relation to the external uniform magnetic field 100 (i.e.: the EMF). Therefore, coil 20 generates torque forces in CCW direction ("1a") and coil 10 generates torque forces in CW direction ("1b"). As these turning forces have opposite directions in relation to each other resulting from opposite polarity of the driver signal, they cancel each other. The created linear motion forces ("2a" and "2b") go into the same direction (in this example towards the West). Thus, they will support each other and the resulting final motion force ("3") goes into the direction West without any rotation.

Fig. 11 shows a magnetic field propulsion unit 1 with one magnetic field generating device 10 and a permanent magnet 23 as a magnetic field source 20 to compensate for torque forces. The example of Fig. 11 is similar to the example of Fig. 10, wherein the permanent magnet 23 replaces the air coil 20 of Fig. 10.

As described above, an air coil is generating linear motion forces and parasitic torque forces. A set of permanent magnets 23 that are mounted onto the same frame structure 5 the air coil 10 is mounted, have the task to create torque forces into the opposite direction. The permanent magnets 23 are placed in such way that the generated torque forces (because of their interaction with the external uniform magnetic field) will be in the opposite turning direction. When electrically powering the air coil 10 to generate linear motion forces (linear acceleration), care has to be taken that the amount of generated parasitic torque forces is of equal value than the counter torque forces created by the permanent magnets 23.

The air coil 20 (used in the example of Fig. 10) is replaced by one or more than one permanent magnet/s 23. The bearing orientation of the permanent magnet 23 (in relation to the uniform external magnetic field, i.e.: Earth magnetic Field or EMF) is similar to the orientation of the air coil 20 in Fig. 10, such that it supports the objective of cancelling the rotational forces by the air coil 10. In this specific example the permanent magnet 23 turns the test object in CCW direction, indicated by "1a". When the air coil 10 is powered up with the pulsed driver signal, this causes a linear motion from East to West and a rotational force in CW direction, so that the resulting turning forces (caused by the interaction between the magnetic field of coil 10 and the EMF) are compensated. Integrated over the time, the CCW turning forces created by the permanent magnet ("1a") and the turning forces in CW direction created by coil 10 ("1b") cancel-out each other. Meaning that over time, the test object will not turn. What remains is the linear forward motion force ("2b")generated by the pulsed driver signal. Therefore, in this specific example, the travel direction will be towards the West ("3").

As the magnetic polarity of a permanent magnet 23 cannot be changed easily, the bearing orientation of the permanent magnet has to be changed manually when the targeted travel direction has to be changed, for example towards the East.

The two magnetic field sources (electric powered air coil 10, and the permanent magnet(s) 23) can be placed in relatively close proximity to each other. However, the permanent magnet(s) 23 should not be placed near or in the center of the air coil 10 due to a risk of demagnetization of the permanent magnets).

The benefit of this solution is that the current consumption is almost halved as only one air coil 10 needs to be powered to create forward motion. However, the magnetic polarity of the permanent magnet cannot be changed easily without additional circuitry (somewhat inflexible when wanting to travel in different direction) and when the electric power of the air coil 10 is switched off permanently, the test object may be turned by the torque forces created by the still active permanent magnets in CCW direction.

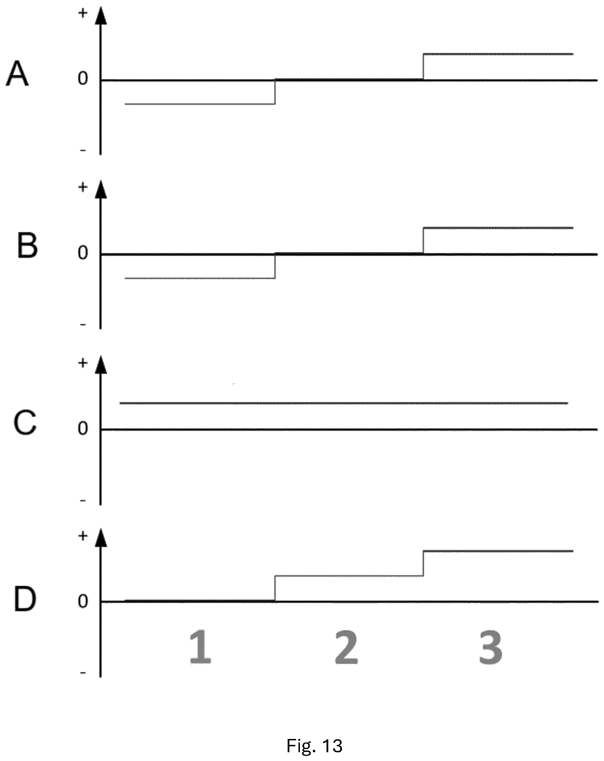

The principle used in the example of Fig. 11 will be described in more details with respect to Figs. 12 and 13.

Fig. 12 shows an arrangement of an air coil 10 and a permanent magnet 20. The permanent magnet is placed outside the air coil 10 at some distance to the air coil 10.

Fig. 13 shows the superposition of the magnetic fields of the air coil and the permanent magnet. Four graphs A, B, C, and D are shown, each graph having three sections 1, 2, and 3.

Graph A shows the supply current of a magnetic field generating device like the air coil 10. Graph B shows the field strength of the magnetic field generating device resulting from the supply current of Graph A: the field strength of Graph B corresponds to the intensity and polarity of the supply current. Graph C shows the field strength of the permanent magnet, which is a constant. Graph D shows the combined field strength of the magnetic fields of the magnetic field generating device and the permanent magnet.

Although the permanent magnet creates a magnetic field all the time (cannot be switched off), the electric powered air coil can be used to effectively compensates the magnetic field from the permanent magnet (see Graphs B, C, and D of section 1 in Fig. 13). In this case, the air coil is powered by a negative electric current (see section 1 of the upper two graphs A and B in Fig. 13), the magnetic field polarity of the air coil is opposite the magnetic field polarity of the permanent magnet, resulting in cancelling out each other (the combined field strength D is zero in section 1).

Section 2 shows the scenario when the air coil is not powered. The combined field strength D is identical to the field strength of the permanent magnet.

When switching the current direction to run with positive polarity through the air coil, then the resulting magnetic field strength (the sum of the field created by the permanent magnet and by the air-coil) is nearly double to what the air coil can generate on its own (see section 3 in Fig. 13). In this case, the air coil is powered by a positive electric current (see section 3 of the upper two graphs A and B in Fig. 13), the magnetic field polarity of the air coil is identical to the magnetic field polarity of the permanent magnet, resulting in increasing the strength of the combined magnetic field (the combined field strength D is higher than both magnetic fields of Graph B and C in section 3).

This arrangement of permanent magnet and electric powered air coil can act neutral to its surroundings (no net-field to the outside) or can create a field that is twice as large in comparison what the air coil can create on its own. Although the air coil needs to be powered at all times (as the field caused by the permanent magnet at times needs to be neutralized), this design solution is very energy efficient as only half of the electric power is needed to generate a doubled sized magnetic field because power grows exponential when increasing the current through the air-coil.

Instead of using permanent magnets to compensate for the parasitic torque forces (as shown in Fig. 11), an electric powered inductor / air coil can be used (as shown in Fig. 10). The placement (bearing orientation in relation to the external uniform magnetic field) of this second electric powered air coil is important in order to achieve the desired effect (generated turning direction).

This second magnetic field source (permanent magnet or electrically powered coil) may be used to compensate the turning forces. It may not be used to create linear motion forces. Therefore, the second magnetic field source can be powered by any type of current: DC or unipolar AC.

The benefit of using a second electric powered inductor / air coil is that the compensation of torque forces can be switched on and off when needed and that the strength and magnetic polarity of the compensation forces can be changed as required.

However, the second magnetic field source requires electric energy. From that point of view, permanent magnets are more energy efficient than an additional electric powered inductor / air coil.

As shown in Fig. 10, two magnetic field generating devices can be used to create only linear motion. The most optimal solution described in this document is to use two electric powered coils or inductors that are working together to generate only linear motion (linear acceleration) and not torque forces. While one air coil on its own is generating the parasitic torque forces that want to turn the magnetic field propulsion unit in one direction (CW or CCW direction), the other air coil will generate parasitic torque forces that turn the magnetic field propulsion unit in the opposite direction. These turning forces have opposite signs due to the orientation of the magnetic field generating devices in relation to each other (one +45° and the other -45° with respect to the external magnetic field lines) and will compensate each other when added together. However, the direction of the generated linear motion forces (linear acceleration) by the first air coil and the second air coil are identical and support each other. To achieve this, the parasitic torque forces cancel out each other and linear motion forces (linear acceleration) support each other, the angular placement (bearing orientation in relation to the EMF) of each air coil is crucial and has to be well defined.

The description refers to a horizontal plane where the magnetic field propulsion unit will act on. Such a horizontal plane may be the surface of water in an ocean/sea on which a boat is hovering or may be the flat street on which a car is driving. As described earlier, the Earth Magnetic Field has an inclination (vertical angle) in relation to these horizontal planes. The inclination angle of the external uniform magnetic field has an effect onto the energy efficiency of the magnetic field propulsion unit. The smaller the inclination angle of the EMF is (in relation to a horizontal plane), the larger the propulsion efficiency will be.

Of course, the here described magnetic propulsion technology can be used in space as well. The freedom of mobility is in space one dimension larger (3D) as compared to a floating object on water or land (2D), for example. This has an effect on the steering algorithm and the number of the required air coils to compensate for the generating parasitic torque forces. Meaning that for in space applications, in most cases at least three air coils are needed. The number of air coils required may be much larger than three for in space applications, depending on the required features and performances.

### Possible use cases of the magnetic field propulsion unit

The currently achieved performances in creating linear motion forces (linear acceleration) are sufficient to manoeuvre and steer a satellite in space. As long as this satellite follows an orbit around the earth that is within the reach of the Earth Magnetic Field (or orbits around another object in space that has its own external magnetic field), the magnetic field propulsion unit will produce linear motion forces and steering (torque) forces that act onto the satellite.

Another very attractive application is de-orbiting a satellite. The process of de-orbiting means to bring back the satellite back to Earth when the satellite has reached its end-of-life. De-orbiting is required to prevent the buildup of hazardous materials that orbits uncontrolled around the earth (or other objects in space that have their own magnetic field) and may damage other flying objects in space.

Besides in space applications, a wide range of applications will benefit from the use / implementing a magnetic field propulsion unit. The range / number of applications will increase as the efficiency of the technology will evolve.

Summing up, the magnetic field propulsion unit uses the following techniques to move an object:
Linear propulsion forces are generated by the magnetic field propulsion unit by a changing magnetic field (varying intensity), not by a constant magnetic field. The type of changes (polarity, ramping up or ramping down, pulse rate) defines the direction and efficiency of the generated propulsion force. Changing the polarity of the magnetic field (resulting from changed polarity of the driver signal) means that the travel direction of the propulsion unit in the external magnetic field is changed; for one travel direction, the polarity is kept the same, but the intensity is varied, for the opposite travel direction, the polarity is changed. The coil driver signal (high current) has to be pulsed with a unipolar signal, i.e., the intensity of the current signal varies, but it still has the same polarity. A saw tooth driver signal may provide best propulsion performance compared to a square / rectangular shaped pulsed signal. For the saw tooth signal, slowly up and suddenly down or suddenly up and slowly down are feasible. As the magnetic field, created by the air coil, generates also torque forces, the propulsion unit will not only create linear motion but also rotational movement.

The parasitic movement has to be compensated for when wanting to move forward in a straight line only. There are several technical solutions to compensate the rotational movement (using permanent magnets, using a second propulsion coil), as summed up in the following:
A constant magnetic field source (i.e.: permanent magnets or DC powered inductor) may be used to compensate for rotational movement. Only one active (electrically powered inductor) magnetic field generating device is required to generate linear propulsion forces in a specific (user selectable) direction as long as there are means in place that prevent the object to be moved from turning (making a partial rotation). Such means can be permanent magnets or an electrically powered inductor that does not have to change its signal amplitude (nearly constant current).

System efficiency may be increased by one or more of the following:
Permanent magnets may be used to boost the magnetic field strength of an active electrically powered inductor (air coil). The permanent magnets are placed near the air coil in such way that their field will support (will increase) the magnetic field generated by the electrically powered air coil. When not needed (as a permanent magnet cannot be switched off), then the electrically powered air coil goes in reverse mode. **In** the reverse mode, the effects caused by the permanent magnets are cancelled (neutralised). The electric power will be used to either neutralise the field generated by the permanent magnets or to doubling the field by going into the forward mode. The benefit of this effective solution (using permanent magnets) is that it is very energy efficient when comparing with the otherwise needed amount of electric current required to generate a large magnetic field without the support of permanent magnets. There may be significant power savings, which is especially beneficial when using a battery-driven magnetic field propulsion unit.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of reference signs

- 1: magnetic field propulsion unit
- 2: center of gravity
- 5: support structure, frame structure
- 10: magnetic field generating device, coil, like an air coil
- 11: central axis of the magnetic field generating device
- 12: first magnetic field
- 13: length of the magnetic field generating device
- 20: magnetic field source
- 21: central axis
- 22: second magnetic field
- 23: permanent magnet
- 30: energy supply unit, battery
- 40: control unit

- 100: external magnetic field
- 101: magnetic field lines

- 201: first inductor
- 202: second inductor

- A: magnetic field generating device supply current
- B: magnetic field generating device field strength
- C: permanent magnet field strength
- D: combined field strength

## Claims

1. Magnetic field propulsion unit (1) for generating a drive force when being arranged in an external magnetic field (100), the magnetic field propulsion unit (1) comprising:
a support structure (5);
a magnetic field generating device (10) attached to the support structure (5) and configured to generate a first magnetic field (12);
an energy supply unit (30);
a control unit (40);
wherein the energy supply unit (30) is configured to provide the magnetic field generating device (10) with electrical energy;
wherein the control unit (40) is configured to control the energy supply unit (30) so that the energy supply unit (30) supplies energy to the magnetic field generating device (10);
wherein the control unit (40) is configured to supply varying current to the magnetic field generating device (10);
wherein the magnetic field generating device (10) has a central axis (11) and is arranged in the external magnetic field (100) such that the central axis (11) is inclined with respect to magnetic field lines (101) of the external magnetic field (100) at an angle different from 0°, 90°, 180°, and 270°.

2. Magnetic field propulsion unit (1) of claim 1,
wherein the central axis (11) is inclined with respect to magnetic field lines (101) of the external magnetic field (100) at an angle between 30° and 60°, 120° and 150°, 210° and 240°, or 300° to 330°.

3. Magnetic field propulsion unit (1) of claim 1 or 2,
wherein the magnetic field generating device (10) is attached to the support structure (5) such that it is eccentric with respect to a center of gravity (2) of the magnetic field propulsion unit (1).

4. Magnetic field propulsion unit (1) of any one of the preceding claims,
wherein the current supplied to the magnetic field generating device is a unipolar current;
wherein the current supplied to the magnetic field generating device is a pulsed current.

5. Magnetic field propulsion unit (1) of any one of the preceding claims,
wherein the magnetic field generating device (10) is a coil having multiple windings.

6. Magnetic field propulsion unit (1) of any one of the preceding claims,
wherein the external magnetic field is the earth's magnetic field.

7. Magnetic field propulsion unit (1) of any one of the preceding claims,
wherein the magnetic field generating device (10) is firmly attached to the support structure (5).

8. Magnetic field propulsion unit (1) of any one of the preceding claims, further comprising:
a magnetic field source (20) attached to the support structure (5) and spaced apart from the magnetic field generating device (10);
wherein the magnetic field source (20) is configured to provide a second magnetic field (22);
wherein a central axis (21) of the magnetic field source (20) is inclined with respect to the magnetic field lines (101) of the external magnetic field (100);
wherein the central axis (21) of the magnetic field source (20) is inclined with respect to the central axis (11) of the magnetic field generating device (10).

9. Magnetic field propulsion unit (1) of claim 8,
wherein the magnetic field source (20) is eccentric with respect to the center of gravity (2) of the magnetic field propulsion unit (1).

10. Magnetic field propulsion unit (1) of claim 8 or 9,
wherein the magnetic field source (20) is a permanent magnet.

11. Magnetic field propulsion unit (1) of claim 8 or 9,
wherein the magnetic field source (20) is a coil.

12. Magnetic field propulsion unit (1) of claim 11,
wherein the magnetic field source (20) is electrically connected to the energy supply unit (30);
wherein the control unit (40) is configured to supply varying current to the magnetic field source (20).

13. Magnetic field propulsion unit (1) of claim 11 or 12,
wherein the magnetic field generating unit (10) and the magnetic field source (20) are arranged such that they generate torque forces in opposite directions when they are supplied with electric current.

14. Magnetic field propulsion unit (1) of claim 11,
wherein the control unit (40) is configured to provide the magnetic field source (20) with unipolar varying current or direct current with a constant current value.

15. Magnetic field propulsion unit (1) of any one of claims 11 to 13,
wherein the control unit (40) is configured to provide the magnetic field source (20) with electric current in a manner different from providing electric current to the magnetic field generating device (10).
